(19) Europäisches Patentamt / European Patent Office / Office européen des brevets

(11) **EP 3 673 562 B1**

(12) **EUROPÄISCHE PATENTSCHRIFT**

(45) Veröffentlichungstag und Bekanntmachung des Hinweises auf die Patenterteilung:
**05.04.2023  Patentblatt 2023/14**

(21) Anmeldenummer: **18737536.5**

(22) Anmeldetag: **27.06.2018**

(51) Internationale Patentklassifikation (IPC):
**H02J 50/60** *(2016.01)*     **H02J 50/12** *(2016.01)*

(52) Gemeinsame Patentklassifikation (CPC):
**H02J 50/12; H02J 50/60**

(86) Internationale Anmeldenummer:
**PCT/EP2018/067228**

(87) Internationale Veröffentlichungsnummer:
**WO 2019/037927 (28.02.2019 Gazette 2019/09)**

(54) **VERFAHREN ZUR DRAHTLOSEN ENERGIEÜBERTRAGUNG VON EINER ENERGIESENDEVORRICHTUNG ZU EINEM VERBRAUCHER SOWIE DRAHTLOSE ENERGIESENDEVORRICHTUNG ZUR DURCHFÜHRUNG DES VERFAHRENS**

METHOD FOR WIRELESS ENERGY TRANSMISSION FROM AN ENERGY TRANSMISSION DEVICE TO A CONSUMER AND WIRELESS TRANSMISSION DEVICE FOR CARRYING OUT THE METHOD

PROCÉDÉ DE TRANSFERT D'ÉNERGIE SANS FIL ENTRE UN DISPOSITIF ÉMETTEUR D'ÉNERGIE ET UN CONSOMMATEUR, ET DISPOSITIF ÉMETTEUR D'ÉNERGIE SANS FIL POUR LA MISE EN OEUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2017   DE 102017214844**

(43) Veröffentlichungstag der Anmeldung:
**01.07.2020   Patentblatt 2020/27**

(73) Patentinhaber: **Robert Bosch GmbH
70442 Stuttgart (DE)**

(72) Erfinder:
• **GONDA, Martin
  77815 Buehl (DE)**
• **MACK, Juergen
  73035 Goeppingen (DE)**
• **KRUPEZEVIC, Dragan
  70565 Stuttgart (DE)**

(56) Entgegenhaltungen:
EP-A1- 2 346 136          WO-A1-2016/050424
DE-A1-102012 112 953      DE-A1-102013 212 588

## Beschreibung

Die Erfindung betrifft ein Verfahren zur drahtlosen, insbesondere induktiven, Energieübertragung von einer Energiesendevorrichtung zu einem Verbraucher, wobei in zumindest einem Verfahrensschritt eine Unterbrechung der Energieübertragung von der Energiesendevorrichtung zu dem Verbraucher in Verbindung mit einer Fremdobjekterkennung erfolgt. Weiterhin betrifft die Erfindung eine drahtlose Energiesendevorrichtung, insbesondere eine induktive Ladevorrichtung, zur Durchführung des erfindungsgemäßen Verfahrens.

## Stand der Technik

Es ist bekannt, akkubetriebene Handgeräte wie Zahnbürsten, Mobilfunkgeräte, oder Computer sowie elektrisch betriebene Handwerkzeuge, Messgeräte, Gartengeräte oder dergleichen drahtlos mit Energie zu versorgen. Zukünftig werden auch die Energiespeicher von elektrisch angetriebenen Fahrzeuge, wie eBikes, eScooter oder PKW, Busse, LKW, etc. drahtlos geladen. Ein weiterer Anwendungsfall für die drahtlose Energieübertragung sind Geräte, die ohne weiteren Energiespeicher oder nur mit kleinem Energiespeicher beispielsweise in Form von Kondensatoren ausgestattet sind und die die drahtlos übertragene Energie direkt verbrauchen. Zu derartigen Geräten gehören Küchengeräte, wie Mixer, Töpfe, etc. die direkt auf einem Induktionskochfeld betreibbar sind, aber zunehmend auch Notebooks, Leuchten, Lüfter oder dergleichen. In der Regel erfolgt die drahtlose Energieübertragung mittels eines elektromagnetisches Felds von einer primärseitigen Energieversorgungseinrichtung zu einem sekundärseitigen Verbraucher, wobei die Primärseite und die Sekundärzeit jeweils mindestens eine Spule aufweisen, die in geringem Abstand zueinander positionierbar sind und so zusammen im Wesentlichen einen Transformator bilden.

Gerät ein elektrisch leitfähiges Fremdobjekt in den Bereich des elektromagnetischen Feldes der Spulen, können sich jedoch Wirbelströme bilden, die das Fremdobjekt erwärmen. Ist das Fremdobjekt magnetisierbar, so kann dieses auch durch Ummagnetisierungs- bzw. Hystereseverluste erwärmt werden. Die Erwärmung kann beträchtlich sein, sodass eine Betriebssicherheit des drahtlosen Energieübertragungssystems nicht mehr gewährleistbar ist. Außerdem kann das Fremdobjekt Energie aus dem elektromagnetischen Feld entziehen, sodass die Energieübertragung zum Verbraucher gestört ist.

Aus der DE 10 2012 205 693 A1 ist ein induktives Ladesystem bekannt mit einer Induktionsladevorrichtung zur drahtlosen Energieübertragung zu einer Akkuvorrichtung, wobei ein Resonanztransformator der Induktionsladevorrichtung mit einer Ladespule ein elektromagnetisches Wechselfeld erzeugt. Eine Bestimmungseinrichtung ist zur Erfassung eines Objekts im Bereich der Ladespule in Abhängigkeit eines elektrischen Parameters am Resonanztransformator vorgesehen. Außerdem umfasst die Induktionsladevorrichtung eine Steuer- und Regeleinheit zur Veränderung eines Gütefaktors des Resonanztransformators, um eine Energieübertragung bei einem niedrigen Gütefaktor und eine Erfassung des Objekts bei einem hohen Gütefaktor zu erlauben.

Aus der DE 10 2013 212 588 ist ferner ein Verfahren zur Fremdobjekterkennung für eine Induktionsladevorrichtung bekannt, bei dem eine Resonanzfrequenz und eine dazu gehörige Ist-Güte einer Schwingkreisschaltung der Induktionsladevorrichtung erfasst werden und nachfolgend die Ist-Güte mit einer von der Resonanzfrequenz abhängigen Soll-Güte verglichen wird. Anhand eines definierten Soll-Gütebereichs wird dann eine Entscheidung über das Vorhandensein eines Fremdobjekts getroffen. EP 2 346 136 A1 offenbart ein Verfahren zur induktiven Energieübertragung, wobei ein iterativer Prozess zur Bestimmung der Resonanzfrequenz und damit zur Optimierung der übertragenen Leistung verwendet wird.

Es ist Aufgabe der Erfindung, die aus dem Stand der Technik bekannten Verfahren zur Fremdobjekterkennung für eine drahtlose Energieübertragungsvorrichtung sowie die entsprechenden drahtlosen Energieübertragungsvorrichtungen weiter zu verbessern und die Energieübertragung weiter zu optimieren.

## Vorteile der Erfindung

Erfindungsgemäß ist ein iterativer Prozess für einen Frequenzdurchlauf zur Erfassung eines lokalen Maximums einer für eine Resonanzfrequenz charakteristischen Ist-Güte der drahtlosen Energieübertragung in zumindest einem Verfahrensschritt vorgesehen.

Unter einer "drahtlosen Energiesendevorrichtung" soll insbesondere eine primärseitige Vorrichtung zum drahtlosen, insbesondere induktiven, Übertragen von Energie an einen sekundärseitigen Verbraucher, insbesondere einen wiederaufladbaren Energiespeicher, verstanden werden. Ein Beispiel für eine drahtlose Energieübertragung ist ein induktives Ladesystem für einen Akkupack einer Handwerkzeugmaschine. Die Erfindung kann jedoch auch auf die verschiedensten Arten der drahtlosen Energieübertragung sowie Energiesende- und -empfangsvorrichtungen angewendet werden, bei denen eine Fremdobjekterkennung sinnvoll oder notwendig ist. Dies kann auch eine drahtlose Energieübertragung umfassen, die optisch, akustisch, kapazitiv oder dergleichen basiert.

Vorzugsweise weist die Energiesendevorrichtung zumindest eine Steuer- oder Regeleinheit auf, die zumindest dazu vorgesehen ist, einen drahtlose Energieübertragung zu steuern oder zu regeln. Unter einem "Verbraucher" soll dabei insbesondere eine Vorrichtung zum temporären Speichern und/oder verbrauchen elektrischer Energie, beispielsweise ein Akkumulator oder ein direkt mit der drahtlos übertragenen, elektrischen Energie versorgtes Gerät, wie ein Radio, eine Leuchte, ein Mixer oder dergleichen, verstanden werden. Es sind verschiedene, einem Fachmann als sinnvoll erscheinende, wiederaufladbare Energiespeicher denkbar; insbesondere soll darunter jedoch ein Lithium-Ionen-Akkumulator verstanden werden.

Des Weiteren soll unter einer "Steuer- oder Regeleinheit" insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Fremdobjekterkennung" soll insbesondere eine Erkennung und/oder eine Überprüfung eines Vorhandenseins von Fremdobjekten, insbesondere in einer Umgebung der drahtlosen Energiesendevorrichtung und/oder des Verbrauchers, verstanden werden. Vorzugsweise soll darunter insbesondere das Erkennen und/oder das Überprüfen eines Vorhandenseins von Fremdobjekten, die in einem Kontaktbereich zwischen der drahtlosen Energiesendevorrichtung und dem Verbraucher angeordnet sind und während einer drahtlosen Energieübertragung zu deren Beeinträchtigung führen können, verstanden werden. Unter "Fremdobjekten" sollen dabei insbesondere metallische und/oder magnetische Bauteile, Teilstücke oder andere Objekte verstanden werden.

Unter einem "Frequenzdurchlauf" soll im Kontext des erfindungsgemäßen Verfahrens ein Prozess verstanden werden, bei dem in Abhängigkeit von der Resonanzfrequenz innerhalb eines definierten Frequenzbereichs nach einem lokalen Maximum einer erfassten bzw. gemessenen Ist-Güte der drahtlosen Energieübertragung gesucht wird. Ist ein derartiges lokales Maximum gefunden, wird der Frequenzumlauf in der Regel beendet, so dass nicht sämtliche Frequenzpunkte durchlaufen werden müssen.

Es ist vorgesehen, dass der iterative Prozess in dem zumindest einen Verfahrensschritt derart ausgeführt wird, dass ausgehend von einer ersten Resonanzfrequenz-Stelle in Abhängigkeit von einer definierten Schrittweite die Ist-Güte an den sich ergebenen Resonanzfrequenz-Stellen derart erfasst wird, dass das lokale Maximum der Ist-Güte zumindest angenähert erreicht ist. Auf diese Weise kann ein vollständiger Frequenzdurchlauf über sämtliche Frequenzstellen vermieden werden, was zu einer kürzeren Fremdobjekterkennung und zu längeren Zyklen der drahtlosen Energieübertragung führt, so dass insgesamt ein schnellerer Energieübertragungsvorgang erreicht werden kann.

Mit besonderem Vorteil wird der iterative Prozess in zumindest einem Verfahrensschritt nur so lange wiederholt, bis die Schrittweite in einem Verfahrensschritt des iterativen Prozesses durch ein Verringern, insbesondere Halbieren, einen unteren Grenzwert unterschritten hat. Dadurch kann die Genauigkeit der Fremdobjekterkennung und die Qualität der drahtlosen Energieübertragung verbessert werden, weil ein geringe Schrittweite der Resonanzfrequenz ein präziseres Auffinden des lokalen Maximums der Ist-Güte ermöglicht.

Um den iterativen Prozess definiert beenden zu können, ist weiterhin vorgesehen, dass er in zumindest einem Verfahrensschritt nur so lange wiederholt wird, bis die erste Resonanzfrequenz-Stelle in zumindest einem Verfahrensschritt des iterativen Prozesses auf einen Wert gesetzt wurde, der unterhalb eines unteren Grenzwerts oder oberhalb eines oberen Grenzwerts für die Resonanzfrequenz liegt.

Der iterative Prozess für den Frequenzdurchlauf zeichnet sich zudem dadurch aus, dass in jeder Iteration mindestens drei Resonanzfrequenz-Stellen bestimmt werden und dass an zumindest zwei dieser Resonanzfrequenz-Stellen jeweils eine charakteristische Ist-Güte erfasst wird. Dies ermöglicht bei entsprechenden Randbedingungen für die an den beiden Resonanzfrequenz-Stellen erfassten Ist-Güten einen sehr kurzen Frequenzdurchlauf in Verbindung mit einem zuverlässigen Auffinden des lokalen Maximums der Ist-Güte.

Die folgenden Verfahrensschritte des iterativen Prozesses dienen allesamt einer möglichst schnellen aber auch genauen Erfassung des lokalen Maximums der Ist-Güte für die jeweils nachfolgende Iteration unter Berücksichtigung unterschiedlicher Bedingungen für die vor diesen Verfahrensschritten erfassten Ist-Güten.

So wird in zumindest einem Verfahrensschritt des iterativen Prozesses eine dritte Resonanzfrequenz-Stelle derart bestimmt, dass sie gegenüber der zweiten Resonanzfrequenz-Stelle um eine Differenz zwischen der zweiten und der ersten Resonanzfrequenz-Stelle erhöht ist, wenn die an der zweiten Resonanzfrequenz-Stelle erfasste Ist-Güte größer ist, als die an der ersten Resonanzfrequenz-Stelle erfasste Ist-Güte.

In zumindest einem weiteren Verfahrensschritt wird an der dritten Resonanzfrequenz-Stelle eine charakteristische Ist-Güte erfasst, wenn die an der zweiten Resonanzfrequenz-Stelle erfasste Ist-Güte kleiner ist, als die an der ersten Resonanzfrequenz-Stelle erfasste Ist-Güte.

Ergänzend ist vorgesehen, dass in zumindest einem weiteren Verfahrensschritt des iterativen Prozesses die zweite Resonanzfrequenz-Stelle derart bestimmt wird, dass sie gegenüber der dritten Resonanzfrequenz-Stelle um eine Differenz zwischen der dritten und der ersten Resonanzfrequenz-Stelle verringert ist, wenn die an der dritten Resonanzfrequenz-Stelle erfasste Ist-Güte größer ist, als die an der ersten Resonanzfrequenz-Stelle erfasste Ist-Güte.

Das erfindungsgemäße Verfahren sieht zudem vor, dass in zumindest einem weiteren Verfahrensschritt des iterativen Prozesses die zweite Resonanzfrequenz-Stelle derart bestimmt wird, dass sie auf einen Mittelwert zwischen der ersten und der dritten Resonanzfrequenz-Stelle verringert ist, wenn die an der dritten Resonanzfrequenz-Stelle erfasste Ist-Güte größer ist, als die an der zweiten Resonanzfrequenz-Stelle erfasste Ist-Güte.

Ist die an der zweiten Resonanzfrequenz-Stelle erfasste Ist-Güte größer, als die an der ersten Resonanzfrequenz-Stelle erfasste Ist-Güte, wird in zumindest einem Verfahrensschritt des iterativen Prozesses die zweite Resonanzfrequenz-Stelle derart bestimmt wird, dass sie auf einen Mittelwert zwischen der ersten und der zweiten Resonanzfrequenz-Stelle verringert ist.

Ist die an der dritten Resonanzfrequenz-Stelle erfasste Ist-Güte kleiner, als die an der zweiten Resonanzfrequenz-Stelle erfasste Ist-Güte, wird in zumindest einem Verfahrensschritt des iterativen Prozesses die zweite Resonanzfrequenz-Stelle derart bestimmt, dass sie auf einen Mittelwert zwischen der ersten und der zweiten Resonanzfrequenz-Stelle verringert ist.

Die Erfindung betrifft auch eine drahtlose Energiesendevorrichtung zur Durchführung des erfindungsgemäßen Verfahrens für einen Leistungsbereich der drahtlos zu übertragenen Energie innerhalb einer unteren Leistungsgrenze von 5 W und einer oberen Leistungsgrenze von 30 W, insbesondere 15 W. Als Beispiel für entsprechende Energiesendevorrichtungen seien hier stellvertretend Notebooks, Tablets, Smartphones, aber auch Radios, Leuchten, kleinere Mess- und Handwerkzeuggeräte etc. genannt.

Ebenso kann die Erfindung auch für drahtlose Energiesendevorrichtungen für einen Leistungsbereich der drahtlos zu übertragenen Energie innerhalb einer unteren Leistungsgrenze von 30 W und einer oberen Leistungsgrenze von 200 W, insbesondere 65 W, ausgelegt sein. Stellvertretend für diesen Leistungsbereich seien viele Motor angetriebene Geräte, wie z.B. Elektrohandwerkzeuge, wie Bohrmaschinen, Schleifgeräte, Sägen, Hobel, Schleifer, etc. oder Küchengeräte, wie Mixer, Küchenmaschinen sowie Elektrofahrzeuge, wie Elektrofahrräder, Scooter, etc. genannt.

Die Erfindung eignet sich zudem für drahtlose Energiesendevorrichtungen mit einem Leistungsbereich der drahtlos zu übertragenen Energie oberhalb einer unteren Leistungsgrenze von 200 W, insbesondere 2000 W, wie elektrisch angetriebene PKW, LKW, Busse, Gabelstapler oder dergleichen und Küchengeräte wie Elektrogrills, Kochtöpfe oder dergleichen sowie stationär betriebene Elektrowerkzeugmaschinen und Industrieanlagen.

Weitere Vorteile der Erfindung ergeben sich durch die in den abhängigen Ansprüchen angegebenen Merkmale sowie aus der Zeichnung und der nachfolgenden Beschreibung.

## Ausführungsbeispiele

## Zeichnung

Die Erfindung wird im Folgenden anhand der Figuren 1 bis 6 beispielhaft erläutert, wobei gleiche Bezugszeichen in den Figuren auf gleiche Bestandteile mit einer gleichen Funktionsweise hindeuten.

Es zeigen

Fig. 1: ein drahtloses Energieübertragungssystem mit einer primären Energiesendevorrichtung und einem sekundärseitigen Verbraucher in einer schematischen Darstellung,

Fig. 2: ein schematisches Diagramm der unterschiedlichen Arbeitsbereiche der drahtlosen Energieübertragungsvorrichtung,

Fig. 3: einen Programmablaufplan des Verfahrens zur drahtlosen Energieübertragung in einer schematischen Darstellung,

Fig. 4: einen ergänzenden Programmablaufplan des Verfahrens zur drahtlosen Energieübertragung in einer schematischen Darstellung.

Fig. 5: einen Programmablaufplan des erfindungsgemäßen Frequenzdurchlaufs für das Verfahren zur drahtlosen Energieübertragung und

Fig. 6: schematische Diagramme zur Verdeutlichung der einzelnen Entscheidungsschritte des erfindungsgemäßen Frequenzdurchlaufs gemäß Figur 5.

## Beschreibung der Ausführungsbeispiele

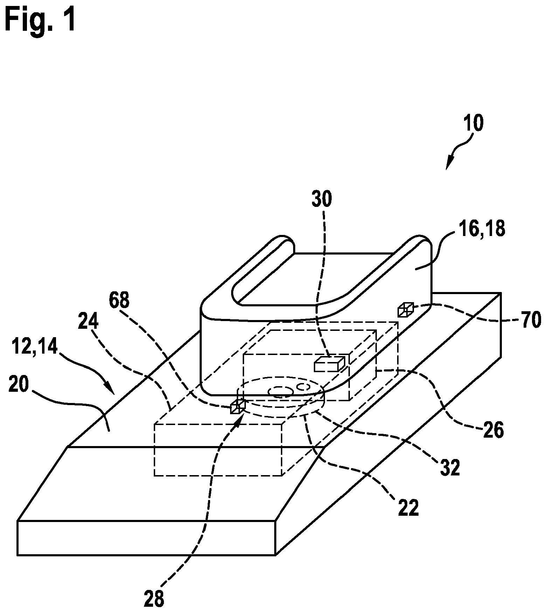

Figur 1 zeigt ein drahtloses Energieübertragungssystem 10 in Form eines induktiven Ladesystems mit einer als Ladevorrichtung 12 ausgebildeten primären Energiesendevorrichtung 14 und einem als Akkupack 16 ausgebildeten sekundärseitigen Verbraucher 18 für eine nicht gezeigte Handwerkzeugmaschine. Ebenso kann der Verbraucher 18 aber auch ein in der Handwerkzeugmaschine fest integrierter Akku sein. Wie eingangs erwähnt, ist die Erfindung jedoch nicht auf induktive Ladesysteme für Handwerkzeugmaschinen und deren Akkus bzw. Akkupacks eingeschränkt. Vielmehr kann sie auf die verschiedensten Arten der drahtlosen Energieübertragung sowie Energiesende- und -empfangsvorrichtungen angewendet werden, bei denen eine Fremdobjekterkennung sinnvoll oder notwendig ist. Dies kann auch eine drahtlose Energieübertragung umfassen, die optisch, akustisch, kapazitiv oder dergleichen basiert.

Figur 1 zeigt den auf einer Oberseite eines Gehäuses 20 der drahtlosen Ladevorrichtung 12 positionierten Akkupack 16. Er wird über zumindest eine in der Ladevorrichtung 12 integrierte, primärseitige Sendespule 22 und eine in dem Akkupack 16 integrierte, sekundärseitige Empfangsspule (nicht dargestellt) des drahtlosen Energieübertragungssystems 10 geladen. Das drahtlose Energieübertragungssystem 10 weist dazu eine primärseitige Elektronikeinheit 24 in der Ladevorrichtung 12 auf, die ihrerseits eine Steuer- und Regeleinheit 26 sowie eine die Sendespule 22 aufweisende Schwingkreisschaltung 28 umfasst.

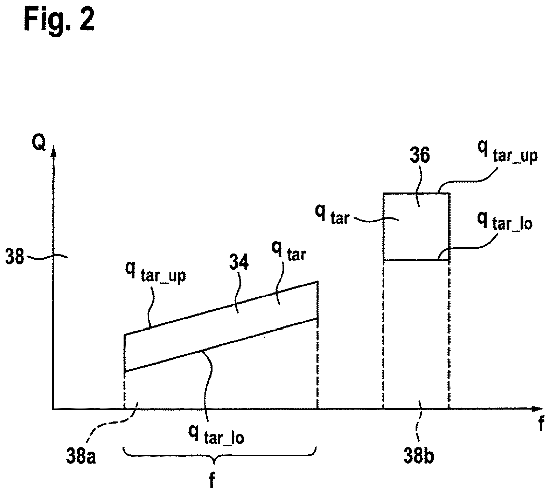

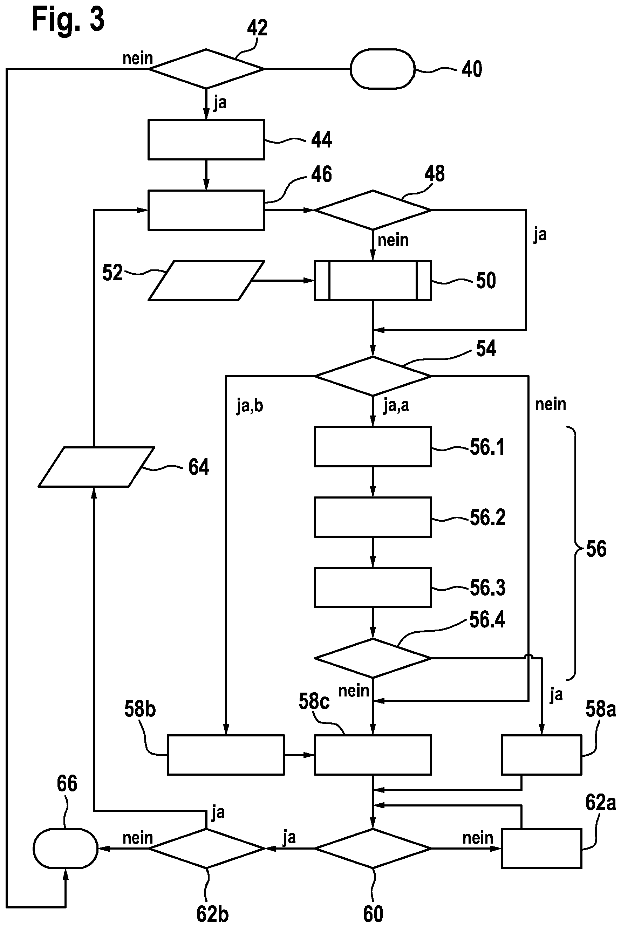

Die Steuer- und Regeleinheit 26 des drahtlosen Energieübertragungssystems 14 ist dazu vorgesehen, eine Resonanzfrequenz $f_{res}$ und eine dazu gehörige Ist-Güte $Q_{act}(f_{res})$ zu bestimmen. Des Weiteren vergleicht die Steuer- und Regeleinheit 26 die Ist-Güte $Q_{act}$ mit einer von der Resonanzfrequenz $f_{res}$ abhängigen Soll-Güte $Q_{tar}(f_{res})$. Zu diesem Zweck weist die Steuer- und Regeleinheit 26 einen Speicher 30 auf, der für die ermittelte Resonanzfrequenz $f_{res}$ einen Soll-Gütebereich $q_{tar}$ mit mehreren Soll-Güten $Q_{tar}(f_{res})$ enthält (vgl. hierzu auch die nachfolgenden Ausführungen zu den Figuren 2 und 3).

Während der drahtlosen Energieübertragung erfolgt in definierten Zeitabständen $T_{cycle}$, z.B. jede Sekunde, eine Fremdobjekterkennung, bei der überprüft wird, ob sich ein oder mehrere Fremdobjekte 32, die die Energieübertragung beeinträchtigen und/oder ein Sicherheitsrisiko darstellen könnten, zwischen der Energiesendevorrichtung 14 und dem Verbraucher 18 oder einfach nur auf der Energiesendevorrichtung 14 befinden. Die Fremdobjekterkennung arbeitet im Wesentlichen derart, dass zunächst die Resonanzfrequenz $f_{res}$ und die dazu gehörige Ist-Güte $O_{act}(f_{res})$ bestimmt werden und nachfolgend die Ist-Güte $Q_{act}(f_{res})$ mit der von der

Resonanzfrequenz $f_{res}$ abhängigen Soll-Güte $Q_{tar}(f_{res})$ verglichen wird. Abschließend erfolgt anhand des definierten Soll-Gütebereichs $q_{tar}$ eine Entscheidung über den Betriebszustand des drahtlosen Energieübertragungssystems 10 bzw. der Energiesendevorrichtung 14.

Die Fremdobjekterkennung wird mit einer Anregespannung der primärseitigen Sendespule 22 der Energiesendevorrichtung 14 von weniger als 10 V, vorzugsweise zwischen 2,5 V und 5 V, durchgeführt. Dadurch kann die Fremdobjekterkennung mit einer vernachlässigbaren Übertragungsleistung erfolgen, so dass eine Energieübertragung zum Verbraucher vermieden und eine daraus resultierende Fehlmessung der Ist-Güte $Q_{act}(f_{res})$ verhindert werden kann. Auch sendet der Verbraucher 18 auf diese Weise keine "fehlerhaften" Datenwerte an die Energiesendevorrichtung 14, wie z.B. einen nicht korrekten Ladestatus eines aufzuladenden Akkumulators, die eine nachfolgende Fremdobjekterkennung verfälschen könnten.

Figur 2 zeigt die im Speicher 30 der Steuer- und Regeleinheit 26 abgelegten Soll-Gütebereiche $q_{tar}$ in Form eines schematischen Diagramms, bei dem auf der Abszisse die Resonanzfrequenz $f_{res}$ und auf der Ordinate die Güte Q aufgetragen ist. Das Diagramm ist in drei Bereiche 34, 36, 38 (38a, 38b) aufgeteilt. Ein erster Bereich 34 definiert einen Soll-Gütebereich $q_{tar}$ für einen Betrieb mit dem Verbraucher 18. Liegt die Ist-Güte $Q_{act}(f_{res})$ zwischen einer oberen Grenze $q_{tar\_up}$ und einer unteren Grenze $q_{tar\_lo}$ des ersten Bereichs 34, wird davon ausgegangen, dass sich kein die Energieübertragung beeinflussendes Fremdobjekt 32 auf der drahtlosen Energiesendevorrichtung 14 befindet. Ferner wird in diesem Bereich von einer drahtlosen Energieübertragung von der Energiesendevorrichtung 14 zum Verbraucher 18 ausgegangen. Ein zweiter Bereich 36 definiert einen Soll-Gütebereich $q_{tar}$ für einen Standby-Betrieb ohne aufliegenden Verbraucher 18. Liegt die Ist-Güte $Q_{act}(f_{res})$ zwischen der oberen Grenze $q_{tar\_up}$ und der unteren Grenze $q_{tar\_lo}$ des zweiten Bereichs 36, wird davon ausgegangen, dass sich weder ein Fremdobjekt 32 noch ein Verbraucher 18 auf der drahtlosen Energiesendevorrichtung 14 befindet.

Ein zwei Teilbereiche 38a, 38b aufweisender dritter Bereich 38 ist von einem Fehlerbereich gebildet. Grundsätzlich kann ein Fehler sowohl in dem drahtlosen Energieübertragungssystem 10, in der Energiesendevorrichtung 14, in dem Verbraucher 18 als auch in einer Umgebung des Energieübertragungssystem 10 liegen. Ein erster Teilbereich 38a ist bezogen auf die Güte Q unterhalb der unteren Grenze $q_{tar\_lo}$ des ersten Bereichs 34 und ein zweiter Teilbereich 38b unterhalb der unteren Grenze $q_{tar\_lo}$ des zweiten Bereichs 36 angeordnet. Liegt die Ist-Güte $Q_{act}(f_{res})$ innerhalb des ersten Teilbereichs 38a, wird davon ausgegangen, dass sich während der Energieübertragung mindestens ein Fremdobjekt 32 in einem diese beeinflussenden Bereich auf der Energiesendevorrichtung 14 oder zwischen der Energiesendevorrichtung 14 und dem Verbraucher 18 befindet. Auch kann davon ausgegangen werden, dass ein beliebiger Fehler vorliegt, oder dass der Verbraucher 18 derart ungünstig auf der drahtlosen Energiesendevorrichtung 14 positioniert ist, dass eine Energieübertragung nicht oder nur sehr eingeschränkt möglich ist. Liegt die Ist-Güte $Q_{act}(f_{res})$ innerhalb des zweiten Teilbereichs 38b, wird davon ausgegangen, dass sich während des Standby-Betriebs mindestens ein Fremdobjekt 32 auf der drahtlosen Energiesendevorrichtung 14 befindet.

Für den Verlauf der Ist-Güte $Q_{act}$ gilt folgender in Figur 2 zu erkennender, nichtlinearer Zusammenhang. Vergrößert sich der Abstand zwischen dem Verbraucher 18 und der Energiesendevorrichtung 14, so steigen sowohl die Resonanzfrequenz $f_{res}$ als auch die Ist-Güte $Q_{act}(f_{res})$ an. Entsprechendes ist zu beobachten, wenn der Verbraucher 18 unabhängig von der Richtung auf der Oberfläche der Energiesendevorrichtung 14 außerhalb ihrer optimalen Position - dem Zentrum der zumindest einen primärseitigen Sendespule 22 - verschoben bzw. positioniert wird. Diese beiden Fälle beschreiben durchaus häufig vorkommende Szenarien. So muss ein lateraler Versatz des Verbrauchers 18 zu der Energiesendevorrichtung 14 erlaubt sein, da ein Benutzer in der Regel die sekundärseitige Empfangsspule des Verbrauchers 18 nicht immer exakt mittig über die zumindest einen Sendespule 22 der Energiesendevorrichtung 14 positionieren können wird. Dies ist insbesondere dann der Fall, wenn die Energiesendevorrichtung 14 eine ebene Oberfläche ohne mechanische Führungshilfen für den Verbraucher 18 aufweist, oder wenn - wie im Falle eines zu ladenden Fahrzeugs - die Positionen der zumindest einen primärseitigen Sendespule 22 und/oder der zumindest einen sekundärseitigen Empfangsspule nicht genau bekannt bzw. einsehbar sind. Weiterhin ist insbesondere bei einem direkten Aufsetzen des Verbrauchers 18 auf die Energiesendevorrichtung 14 auch ein vertikales Verkanten infolge von Fremdobjekten 32 zwischen dem Verbraucher 18 und der Energiesendevorrichtung 14 denkbar.

Figur 3 zeigt einen Programmablaufplan des Verfahrens zur drahtlosen Energieübertragung. Nach dem Start 40 wird im ersten Schritt 42 ein so genannter Power-On-Self-Test (POST) der Energiesendevorrichtung 14 durchgeführt. Der Start 40 kann automatisch mit dem Auflegen des Verbrauchers 18 auf die Energiesendevorrichtung 14 oder manuell durch Betätigung eines nicht gezeigten Tasters an der Energiesendevorrichtung 14 und/oder dem Verbraucher 18 erfolgen. Ist der POST in Schritt 42 erfolgreich durchlaufen worden, initialisiert die Steuer- und Regeleinheit 26 der Energiesendevorrichtung 14 die Resonanzfrequenz $f_{res}$, die Ist-Güte $Q_{act}(f_{res})$ und die Zyklusdauer $T_{cycle}$ der nachfolgenden Verfahrensschritte in einem zweiten Schritt 44 mit $f_{res} = f_{stdby}$, $Q_{act,n}(f_{res}) = 0$ und $T_{cycle} = T_{min}$, wobei $f_{stdby}$ eine zulässige Resonanzfrequenz im Standby-Betrieb (vergleiche Figur 2) und $T_{min}$ eine minimale Zyklusdauer (z.B. 10 ms) beschreiben. Alternativ ist es ebenso möglich, $T_{cycle}$ initial auf $T_{min} = 0$ zu setzen.

Im nächsten Schritt 46 wird zunächst für die initialisierte Resonanzfrequenz eine Ist-Güte $Q_{act,n+1}(f_{res})$ gemessen und nachfolgend im vierten Schritt 48 mit der initialisierten Ist-Güte $Q_{act,n}(f_{res})$ verglichen. Da es unmittelbar nach dem Start des Verfahrens zur drahtlosen Energieübertragung keine Übereinstimmung zwischen der initialisierten und der gemessenen Ist-Güte gibt, folgt mit einem fünften Schritt 50 ein von der Steuer- und Regeleinheit 26 durchgeführter Teilprozess in Gestalt eines Frequenz-Durchlaufs derart, dass die Steuer- und Regeleinheit 26 eine nicht dargestellte Frequenzeinheit der primärseitigen Elektronikeinheit 24 ansteuert, wobei die Frequenzeinheit der Schwingkreisschaltung 28 vorgeschaltet ist. Dem Fachmann ist die Ansteuerung einer derartigen Schwingkreisschaltung zur Durchführung eines Frequenzdurchlaufs im Wesentlichen bekannt. Daher soll hierauf nicht näher eingegangen werden.

Zur Ermittlung der Resonanzfrequenz $f_{res}$ wird in dem fünften Schritt 50 während des Frequenzdurchlaufs eine Resonanzüberhöhung an der primärseitigen Sendespule 22 erfasst. Aus der an der Stelle der Resonanzüberhöhung ermittelten Amplitude kann dann in bekannter Weise die Ist-Güte $Q_{act,n+1}(f_{res})$ berechnet werden; die Stelle der Resonanzüberhöhung entspricht der ermittelten Resonanzfrequenz $f_{res}$. Diese beiden Werte werden nun mit den in dem Speicher 30 der Steuer- und Regeleinheit 26 hinterlegten Soll-Gütebereich $q_{tar}$ (Schritt 52, siehe auch Figur 2) in einem siebten Schritt 54 verglichen.

Liegt die Ist-Güte $Q_{act,n+1}(f_{res})$ zwischen der oberen und der unteren Grenze $q_{tar\_up}$, $q_{tar\_lo}$ des ersten Bereichs 34 gemäß Figur 2, kann davon ausgegangen werden, dass sich für die anstehende drahtlose Energieübertragung kein diese beeinflussendes Fremdobjekt 32 auf der drahtlosen Energiesendevorrichtung 14 befindet, so dass das Verfahren zur drahtlosen Energieübertragung den nachfolgenden, aus vier Teilschritten 56.1, 56.2, 56.3, 56.4 bestehenden Teilprozess 56 durchläuft, in dem eine Kommunikation zwischen der Energiesendevorrichtung 14 und dem Verbraucher 18 aufgebaut und überprüft wird. Im ersten Teilschritt 56.1 wird von der Steuer- und Regeleinheit 26 der Energiesendevorrichtung 14 ein Synchronisations-Impuls erzeugt und vorzugsweise über die primärseitige Sendespule 22 und die sekundärseitige Empfangsspule an den Verbraucher 18 gesendet. Alternativ wäre für die Kommunikation zwischen Energiesendevorrichtung 14 und Verbraucher 18 auch eine andere drahtlose Datenübertragung, z.B. per Bluetooth, optisch, akustisch oder dergleichen, denkbar. Werden nach dem Synchronisations-Impuls die notwendigen Empfangsdaten "Rx Data" des Verbrauchers 18 im zweiten Teilschritt 56.2 durch die primärseitige Elektronikeinheit 24 der Energiesendevorrichtung 14 empfangen, kann die Kopplung zwischen Energiesendevorrichtung 14 und Verbraucher 18 im dritten Teilschritt 56.3 überprüft werden. Ist die Überprüfung der Kopplung und der Empfangsdaten erfolgreich, wird im vierten Teilschritt 56.4 entschieden, die drahtlose Energieübertragung zum Verbraucher 18 gemäß einem achten Schritt 58a zu starten. Ist sie dagegen nicht erfolgreich, wird von einem Fehler und/oder einem Fremdobjekt 32 in einem alternativen, achten Schritt 58c ausgegangen.

Liegt die Ist-Güte $Q_{act,n+1}(f_{res})$ zwischen der oberen und der unteren Grenze $q_{tar\_up}$, $q_{tar\_lo}$ des zweiten Bereichs 36 gemäß Figur 2, wird davon ausgegangen, dass sich das drahtlose Energieübertragungssystem 10 in einem Standby-Betrieb befindet und kein Fremdobjekt 32 auf der drahtlosen Energiesendevorrichtung 14 liegt. Somit springt das Verfahren zur drahtlosen Energieübertragung ausgehend vom sechsten Schritt 52 direkt in einen weiteren alternativen, achten Schritt 58b.

Ergibt der Vergleich zwischen der Ist-Güte $Q_{act,n+1}(f_{res})$ und der Soll-Güte $Q_{tar}(f_{res})$ im sechsten Schritt 52, dass die Ist-Güte $Q_{act,n+1}(f_{res})$ außerhalb des Soll-Gütebereichs $q_{tar}$ liegt, so wird gemäß der obigen Ausführungen zu Figur 2 in Schritt 58c ein Fehler und/oder ein vorhandenes Fremdobjekt 32 angenommen.

Ausgehend von den drei möglichen, achten Schritten 58a (Betrieb zur drahtlosen Energieübertragung), 58b (Standby-Betrieb), 58c (Fehler oder Fremdobjekt erkannt) wird in einem neunten Verfahrensschritt 60 entschieden, ob die eingestellte Zykluszeit $T_{cycle}$ eine maximale Zykluszeit $T_{max}$ von z.B. einer Sekunde überschritten hat. $T_{cycle}$ definiert die Periodendauer zwischen zwei aufeinanderfolgenden Durchläufen des Verfahrens zur drahtlosen Energieübertragung. Die Schritte 46 bis 58 des Verfahrens zur drahtlosen Energieübertragung dauern dagegen in der Regel nur wenige Millisekunden und hängen maßgeblich von der Rechenleistung der primärseitigen Steuer- und Regeleinheit 26 ab. So lange die Zykluszeit $T_{cycle}$ die maximale Zykluszeit $T_{max}$ in dem neunten Schritt 60 noch nicht überschritten hat, wird sie in einen zehnten Schritt 62a sukzessive oder einmalig auf einen festgelegten Wert erhöht. Während des Durchlaufs der Schritte 60 und 62a ist das eigentliche Verfahren zur Betriebsarten- und/oder Fehler- bzw. Fremdobjekterkennung gemäß der Schritte 46 bis 58 bereits abgeschlossen, so dass abhängig von der in dem sechsten Schritt 54 vorgenommenen Entscheidung so lange die drahtlose Energieübertragung gemäß Schritt 58a, der Standby-Betrieb gemäß Schritt 58b oder eine Unterbrechung der Energieübertragung bzw. des Standby-Betriebs gemäß Schritt 58c erfolgt, bis $T_{cycle}$ die maximale Zykluszeit $T_{max}$ überschritten hat. Danach wird in Schritt 62b entschieden, ob das Verfahren wiederholt oder beendet werden soll. Im Falle einer Wiederholung, werden in einem elften Schritt 64 die bisher hinterlegte Ist-Güte $Q_{act,n}(f_{res})$ auf den Wert der aktuellen Ist-Güte $Q_{act,n+1}(f_{res})$ des zurückliegenden Zyklus und die Zykluszeit $T_{cycle}$ auf den Minimalwert $T_{min}$ gesetzt. Danach beginnt das Verfahren mit dem dritten Schritt 46 und der Messung einer neuen Ist-Güte $Q_{act,n+1}(f_{res})$ erneut, wobei der nachfolgende Frequenzdurchlauf gemäß Schritt 50 ausgelassen wird, wenn sich bisher hinterlegte und neue Ist-Güte wegen $Q_{act,n+1}(f_{res}) = Q_{act,n}(f_{res})$ nicht unterscheiden.

Wurde im ersten Schritt 42 ein Fehler während des POST festgestellt oder wurde im elften Schritt 64 entschieden, den Zyklus nicht zu wiederholen, wird das Verfahren zur drahtlosen Energieübertragung mit dem abschließenden Schritt 66 gestoppt.

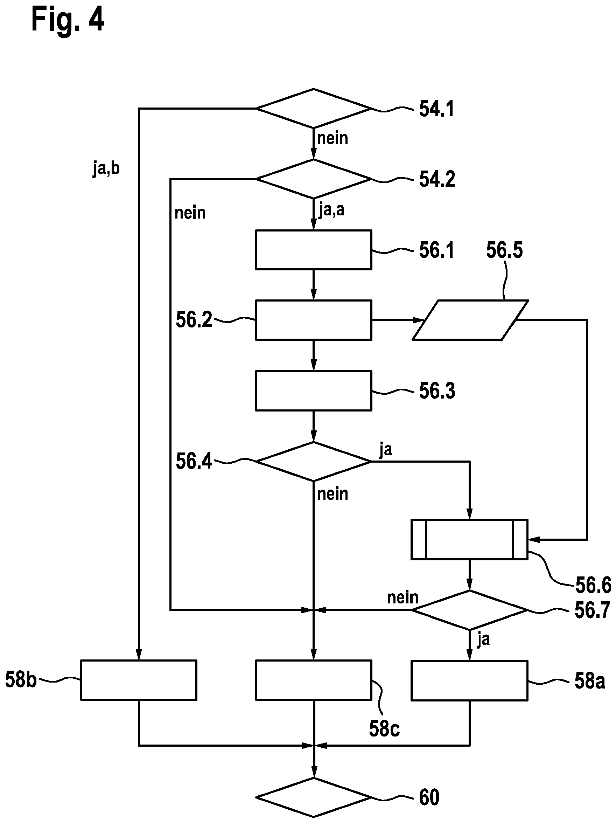

Eine besondere Bedeutung für die drahtlose Energieübertragung kommen den in dem zweiten Teilschritt 56.2 des Teilprozesses 56 empfangenen Daten "Rx Data" gemäß Figur 4 zu. Dabei stellt das in Figur 4 gezeigte Flussdiagramm lediglich einen Ausschnitt des in Figur 3 gezeigten Programmablaufplans dar, wobei identische Verfahrensschritte jeweils mit denselben Bezugszeichen versehen wurden und der siebte Verfahrensschritt 54 in zwei Teilschritte 54.1 und 54.2 zerlegt wurde.

Liegt die Ist-Güte $Q_{act,n+1}(f_{res})$ in Teilschritt 54.1 zwischen der oberen und der unteren Grenze $q_{tar\_up}$, $q_{tar\_lo}$ des zweiten Bereichs 36 gemäß Figur 2, wird entsprechend Figur 3 davon ausgegangen, dass sich das drahtlose Energieübertragungssystem 10 in einem Standby-Betrieb befindet und kein Fremdobjekt 32 auf der drahtlosen Energiesendevorrichtung 14 liegt. Somit springt das Verfahren zur drahtlosen Energieübertragung ausgehend vom sechsten Schritt 52 direkt in den achten Schritt 58b. Liegt die Ist-Güte $Q_{act,n+1}(f_{res})$ in Teilschritt 54.1 dagegen außerhalb des zweiten Bereichs 36, wird in einem nachfolgenden Teilschritt 54.2 geprüft, ob sie zwischen der oberen und der unteren Grenze $q_{tar\_up}$,

$q_{tar\_lo}$ des ersten Bereichs 34 gemäß Figur 2 liegt. Ist dies nicht der Fall, wird in Schritt 58c von einem Fehler und/oder einem Fremdobjekt 32 ausgegangen. Entspricht die Ist-Güte $Q_{act,n+1}(f_{res})$ dagegen einer Soll-Güte $Q_{tar}(f_{res})$ des ersten Bereichs 34, so wird in dem nachfolgenden Teilprozess 56 eine Kommunikation zum Verbraucher 18 aufgebaut.

In gegenüber Figur 3 zusätzlichen Teilschritten 56.5 und 56.6 ist weiterhin vorgesehen, eine aus den empfangenen Daten des Verbrauchers 18 "Rx Data" und/oder in der Energiesendevorrichtung 14 sensierten Daten ableitbare Energieübertragungskenngröße für die nachfolgende Fremdobjekterkennung zu berücksichtigen. Die Energieübertragungskenngröße ist insbesondere eine Kenngröße, welche während der drahtlosen Energieübertragung einen Energiefluss, im Falle der induktiven Energieübertragung insbesondere einen elektromagnetischen Energiefluss, zwischen der Energiesendevorrichtung 14 und dem Verbraucher 18 bevorzugt quantitativ, charakterisiert. So kann die Energieübertragungskenngröße eine zwischen der Energiesendevorrichtung 14 und dem Verbraucher 18 übertragene elektrische Leistung bzw. ein Leistungsgradient, eine Temperatur bzw. ein Temperaturgradient, ein benötigter Energiebedarf des Verbrauchers 18, ein Ladezustand des als wiederaufladbaren Energiespeichers ausgebildeten Verbrauchers 18, ein Gradient der erfassten Ist-Güte $Q_{act,n+1}(f_{res})$, eine in dem Verbraucher gemessene Vibration bzw. ein Vibrationsgradient und/oder eine Authentifizierungs-Information über die Berechtigung des Verbrauchers 18 zur drahtlosen Energieübertragung sein.

Alternativ oder ergänzend kann die Elektronikeinheit 24 der Energiesendevorrichtung 14 aber auch eine mit der Steuer- und Regeleinheit 26 verbundene Sensoreinheit 68 zur kontinuierlichen oder quasikontinuierlichen Erfassung der Energieübertragungskenngröße aufweisen. Dabei kann die Erfassung sowohl während der Fremdobjekterkennung als auch während der drahtlosen Energieübertragung, während des Standby-Betriebs oder auch während einer Unterbrechung der Energieübertragung infolge eines erkannten Fehlers und/oder Fremdobjekts erfolgen. Eine entsprechende Sensoreinheit 70 kann zusätzlich oder alternativ auch in dem Verbraucher 18 zur Erzeugung der obigen Empfangsdaten "Rx Data" erforderlich sein (vergleiche Figur 1). Die Sensorvorrichtung kann aus unterschiedlichsten Sensoren, wie einem Shuntwiderstand, einem Temperaturfühler, einem Beschleunigungssensor, einem Drehratensensor, aber auch einem Luftdruckmesser, einem Feuchtigkeitsmesser oder dergleichen bestehen. Da dem Fachmann entsprechende Sensoren hinlänglich bekannt sind, soll hierauf nicht weiter eingegangen werden. Bei der sensierten Energieübertragungskenngröße kann es sich somit um einen elektrischen Strom bzw. einen Stromgradienten in der Sendespule 22, eine an der Sendespule 22 anliegende elektrische Spannung bzw. einen Spannungsgradienten, eine Temperatur bzw. einen Temperaturgradienten der Sendespule 22, eine aufgenommene Leistung bzw. einen Leistungsgradienten eines Netzteils der Energiesendevorrichtung 14, eine Versorgungsspannung bzw. ein Versorgungsspannungsgradient des Netzteils der Energiesendevorrichtung 14 oder dergleichen handeln. Als Energieübertragungskenngröße kann auch eine gemessene Vibration bzw. ein Vibrationsgradient der Energiesendevorrichtung 14 in Frage kommen.

Ebenfalls ist es denkbar, die Energieübertragungskenngröße abhängig von einem Montageort der Energiesendevorrichtung 14, zum Beispiel stationär in einer Werkstatt oder mobil in einem Fahrzeug, auszugestalten. Der Montageort lässt sich beispielsweise anhand der gemessen Vibration bzw. des gemessenen Vibrationsgradienten der Energiesendevorrichtung 14 bestimmen. Ebenso können hierfür aber auch vorhandene Geschwindigkeits- und/oder GPS-Daten eines Fahrzeugs oder dergleichen herangezogen werden.

Zur Optimierung der Fremdobjekterkennung lassen sich mittels der Steuer- und/oder Regeleinheit 26 aus der Energieübertragungskenngröße verschiedene Parameter zur Regelung der Fremdobjekterkennung bestimmen. In zumindest einem Teilschritt 56.6 wird in Abhängigkeit von der zumindest einen Energieübertragungskenngröße zumindest eine Genauigkeitskenngröße, beispielsweise eine Anzahl diskreter Frequenzpunkte und/oder eine Anzahl an Frequenzdurchlauf-Zyklen (vergleiche Schritt 50 in Figur 3), der Fremdobjekterkennung bestimmt. Zudem kann eine Dauer und/oder Häufigkeit, insbesondere eine Frequenz, einer Ausführung der Fremdobjekterkennung während der drahtlosen Energieübertragung in Abhängigkeit von der zumindest einen Energieübertragungskenngröße bestimmt werden. So kann die Häufigkeit während der drahtlosen Energieübertragung mit einer mittleren Übertragungsleistung, beispielsweise einer Übertragungsleistung zwischen 5 W und 10 W, gegenüber einer Häufigkeit während einer drahtlosen Energieübertragung mit einer hohen Übertragungsleistung, beispielsweise einer Übertragungsleistung von mehr als 10 W, reduziert sein. Bei einer drahtlosen Energieübertragung mit einer geringen Übertragungsleistung kann eine Ausführung einer Fremdobjekterkennung vollständig unterlassen werden. Weiterhin kann in Teilschritt 56.6 in Abhängigkeit von der zumindest einen Energieübertragungskenngröße die maximale Zykluszeit $T_{max}$ und/oder eine zeitliche Länge des in Schritt 50 durchzuführenden Frequenzdurchlaufs bestimmt werden.

Unter einer "Häufigkeit" der Fremdobjekterkennung soll insbesondere eine Frequenz einer Ausführung der Fremdobjekterkennung während der drahtlosen Energieübertragung oder während eines Standby-Betriebs der Energiesendevorrichtung verstanden werden.

Anhand der in Teilschritt 56.6 festgelegten Maßnahmen wird im abschließenden Teilschritt 56.7 entschieden, ob die Fremdobjekterkennung für eine definierte Zeitspanne bzw. für die restliche Energieübertragung deaktiviert werden kann und/oder ob die in Schritt 56.6 festgelegten Grenzwerte der für den Energieübertragungsvorgang erforderlichen Resonanzfrequenz $f_{res}$ und Ist-Güte $Q_{act,n+1}(f_{res})$ eingehalten wurden. Ist dies der Fall und wurde die Fremdobjekterkennung fehlerlos durchlaufen, kann die Energie in Schritt 58a drahtlos von der Energiesendevorrichtung 14 auf den Verbraucher 18 übertragen werden. Wurde dagegen in Teilschritt 56.7 entschieden, dass die Grenzwerte überschritten wurden bzw. die Fremdobjekterkennung nicht ausgesetzt werden darf, so wird gemäß Schritt 58c auf ein Fehler oder ein vorhandenes Fremdobjekt 32 geschlossen, so dass bis zur Entscheidung über die Wiederholung des Zyklus in Schritt 62b keine weitere Energieübertragung erfolgt.

Die Energieübertragung wird durch die Steuer- und/oder Regeleinheit 26 der Energiesendevorrichtung 14 kontinuierlich in Abhängigkeit von der Zykluszeit $T_{cycle}$ auf Unregelmäßigkeiten überprüft. Erkennt die Steuer- und/oder Regeleinheit 26 eine zeitliche Änderung, insbesondere eine Schwankungsamplitude und/oder einen Gradienten, der Energieübertragungskenngröße, wird die Energieübertragung unterbrochen und eine erneute Fremdobjekterkennung gemäß der in Figur 3 gezeigten Schritte 60 bis 64 initiiert.

In Abhängigkeit von einem Unterschreiten eines, insbesondere unteren, Grenzwerts durch einen Wert der Energieübertragungskenngröße wird die Fremdobjekterkennung in Teilschritt 56.7 für einen definierten Zeitraum oder bis zum Ende der Energieübertragung durch entsprechendes Erhöhen der maximalen Zykluszeit $T_{max}$ in Teilschritt 56.6 ausgesetzt. In Abhängigkeit von einem Überschreiten eines, insbesondere oberen, Grenzwerts durch einen Wert der Energieübertragungskenngröße wird in Teilschritt 56.7 entschieden, die Fremdobjekterkennung weiterhin durchzuführen und/oder die maximale Zykluszeit $T_{max}$ in Teilschritt 56.6 zu reduzieren. Insbesondere wird die Durchführung der Fremdobjekterkennung bei Unterschreiten eines unteren Grenzwerts einer Übertragungsleistung, beispielsweise bei einem Absinken der Übertragungsleistung auf einen Wert unterhalb von 5 W, ausgesetzt. Bei Überschreiten eines festgelegten Grenzwerts der Übertragungsleistung wird die Fremdobjekterkennung wieder eingesetzt.

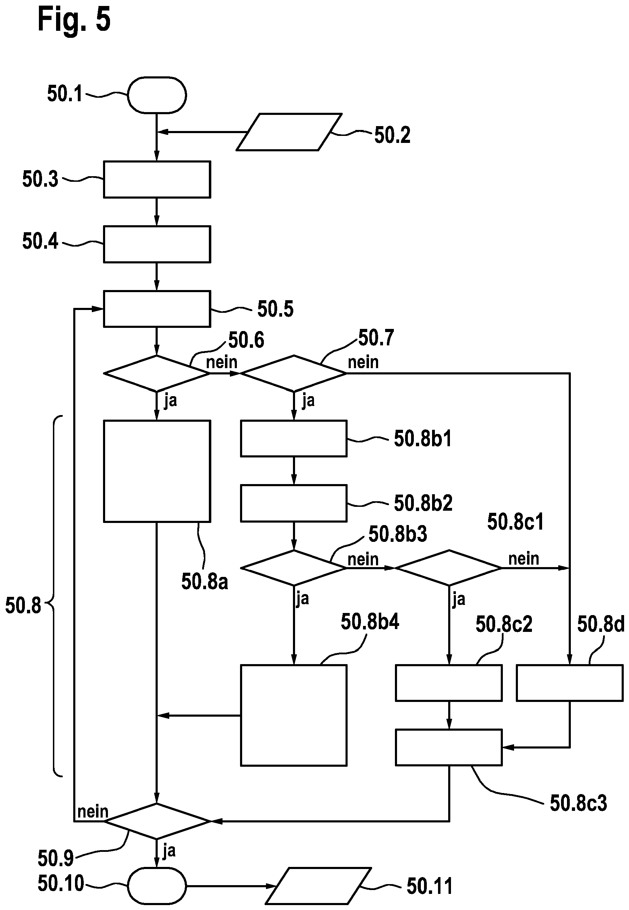

Mit Bezug auf Figur 5 sieht die Erfindung vor, den Frequenzdurchlauf zur Bestimmung der Resonanzfrequenz $f_{res}$ und der lokalen Maximums der aktuellen Ist-Güte $Q_{act,n+1}(f_{res})$ gemäß des in Figur 3 gezeigten Teilprozesses 50 iterativ durchzuführen. Dazu startet der iterative Prozess für den Frequenzdurchlauf zunächst mit der Übernahme der bisherigen Resonanzfrequenz $f_{res}$ als Start-Resonanzfrequenz $f_{res,A}$ und der Definition einer Resonanzfrequenz-Schrittweite $f_{step}$, einer minimalen Schrittweite $f_{step,min}$ sowie einer minimal und maximal erlauben Resonanzfrequenz $f_{res,min}$ bzw. $f_{res,max}$ in den Teilschritten 50.1 und 50.2 Die Resonanzfrequenz-Schrittweite $f_{step}$ wird zunächst auf einen großen Wert, z.B. 50 Hz gesetzt, um den nachfolgenden iterativen Prozess möglichst schnell durchlaufen zu können.

In einem dritten Teilschritt 50.3 des Frequenzdurchlaufs 50 wird nun zunächst die Ist-Güte $Q_{act,A}(f_{res,A})$ für die Start-Resonanzfrequenz $f_{res,A}$ in der bekannten Art und Weise gemessen. Im vierten Teilschritt 50.4 wird die Resonanzfrequenz um die Schrittweite $f_{step}$ erhöht, so dass für eine zweite Resonanzfrequenz-Stelle $f_{res,B}$ gilt:

$$f_{res,B} = f_{res,A} + f_{step}$$

Anschließend wird in einem fünften Teilschritt 50.5 die Ist-Güte $Q_{act,B}(f_{res,B})$ an der zweiten Resonanzfrequenz-Stelle $f_{res,B}$ erneut gemessen und in den nachfolgenden Teilschritten 50.6 und 50.7 mit der vorherigen Ist-Güte $Q_{act,A}(f_{res,A})$ verglichen.

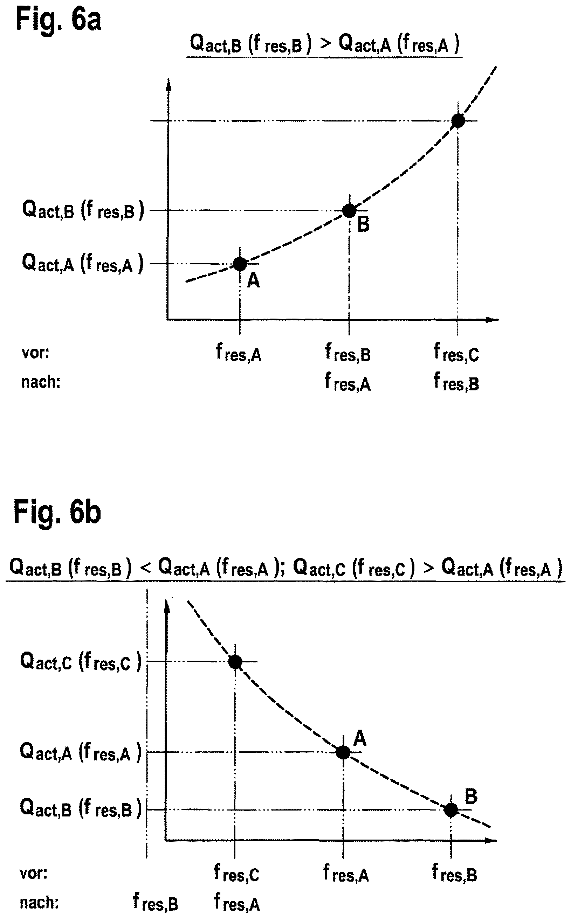

In Figur 6a ist für den sechsten Teilschritt 50.6 ein Beispiel eines Güteverlaufs in Abhängigkeit von der Resonanzfrequenz dargestellt. Dabei wird die in Teilschritt 50.6 definierte Bedingung für die an den beiden Resonanzfrequenz-Stellen $f_{res,A}$, $f_{res,B}$ gemessenen Ist-Güten

$$Q_{act,B}(f_{res,B}) > Q_{act,A}(f_{res,A})$$

erfüllt, so dass es für dieses Beispiel mit dem achten Teilschritt 50.8a weiter geht, in dem eine dritte Resonanzfrequenz-Stelle mit

$$f_{res,C} = 2*f_{res,B} - f_{res,A}$$

berechnet wird, die also gegenüber der zweiten Resonanzfrequenz-Stelle $f_{res,B}$ um die Differenz zwischen der zweiten und der ersten Resonanzfrequenz-Stelle $f_{res,B}$, $f_{res,A}$ erhöht ist. Zudem werden die beiden bisherigen Resonanzfrequenzstellen $f_{res,A}$, $f_{res,B}$ mit

$$f_{res,A} = f_{res,B}$$

$$f_{res,B} = f_{res,C}$$

sowie die bisherige Ist-Güte $Q_{act,A}(f_{res,A})$ mit

$$Q_{act,A}(f_{res,A}) = Q_{act,B}(f_{res,B})$$

neu gesetzt. Im nachfolgenden neunten Teilschritt 50.9 erfolgt dann eine Prüfung, ob die neu gesetzte erste Resonanzfrequenz-Stelle $f_{res,A}$ außerhalb der in Teilschritt 50.2 definierten Grenzen $f_{res,min}$, $f_{res,max}$ liegt oder ob die Schrittweite $f_{step}$ kleiner ist, als ihr unterer Grenzwert $f_{step,min}$. Ist eine der Bedingungen erfüllt, endet der Frequenzdurchlauf mit Schritt 50.10 und der anschließenden Ausgabe der ermittelten Resonanzfrequenz

$$f_{res} = f_{res,A}$$

sowie der zugehörigen Ist-Güte

$$Q_{act,n+1}(f_{res,n+1}) = Q_{act,A}(f_{res,A})$$

im elften Teilschritt 50.11. Diese Werte werden dann an den siebten Schritt 54 gemäß Figur 3 zur weiteren Durchführung der Fremdobjekterkennung übergeben.

Wurde im neunten Teilschritt 50.9 festgestellt, dass die erste Resonanzfrequenz-Stelle $f_{res,A}$ noch innerhalb der definierten Grenzen $f_{res,min}$, $f_{res,max}$ liegt oder die Schrittweite größer ist, als ihr unterer Grenzwert $f_{step,min}$, so beginnt der iterative Prozess mit dem fünften Teilschritt 50.5 und der Messung der Ist-Güte $Q_{act,B}(f_{res,B})$ an der zweiten Resonanzfrequenz-Stelle $f_{res,B}$ erneut.

Wurde im sechsten Teilschritt 50.6 festgestellt, dass die Bedingung

$$Q_{act,B}(f_{res,B}) > Q_{act,A}(f_{res,A})$$

nicht erfüllt ist, so geht es mit dem siebten Teilschritt 50.7 und der Entscheidung, ob

$$Q_{act,B}(f_{res,B}) < Q_{act,A}(f_{res,A}),$$

weiter. Ist diese Bedingung erfüllt, so wird in Teilschritt 50.8b1 die dritte Resonanzfrequenz-Stelle $f_{res,C}$ mit

$$f_{res,C} = 2*f_{res,A} - f_{res,B}$$

neu gesetzt. Die dritte Resonanzfrequenz-Stelle $f_{res,C}$ ist demnach gegenüber der zweiten Resonanzfrequenz-Stelle $f_{res,B}$ um die Differenz zwischen der zweiten und der ersten Resonanzfrequenz-Stelle $f_{res,B}$, $f_{res,A}$ verringert. Anschließend wird in einem nachfolgenden Teilschritt 50.8b2 die Ist-Güte $Q_{act,C}(f_{res,C})$ an der dritten Resonanzfrequenz-Stelle $f_{res,C}$ gemessen und im Teilschritt 50.8b3 mit der Ist-Güte $Q_{act,A}(f_{res,A})$ an der ersten Resonanzfrequenz-Stelle $f_{res,A}$ verglichen.

In Figur 6b ist der Fall grafisch dargestellt, dass die in Teilschritt 50.8b3 abgefragte Bedingung

$$Q_{act,C}(f_{res,C}) > Q_{act,A}(f_{res,A})$$

erfüllt ist, so dass es nach eines erneuten Setzen der ersten und der zweiten Resonanzfrequenz-Stelle $f_{res,A}$, $f_{res,B}$ sowie der Ist-Güte $Q_{act,A}(f_{res,A})$ an der ersten Resonanzfrequenz-Stelle $f_{res,A}$ in Teilschritt 50.8b4 mit

$$f_{res,B} = 2*f_{res,C} - f_{res,A}$$

$$f_{res,A} = f_{res,C}$$

und

$$Q_{act,A}(f_{res,A}) > Q_{act,C}(f_{res,C})$$

mit dem neunten Teilschritt 50.9 gemäß der obigen Beschreibung weiter geht. Dabei wird die zweite Resonanzfrequenz-Stelle $f_{res,B}$ derart neu gesetzt, dass sie gegenüber der dritten Resonanzfrequenz-Stelle $f_{res,C}$ um die Differenz zwischen der zweiten und der ersten Resonanzfrequenz-Stelle $f_{res,B}$, $f_{res,A}$ verringert ist.

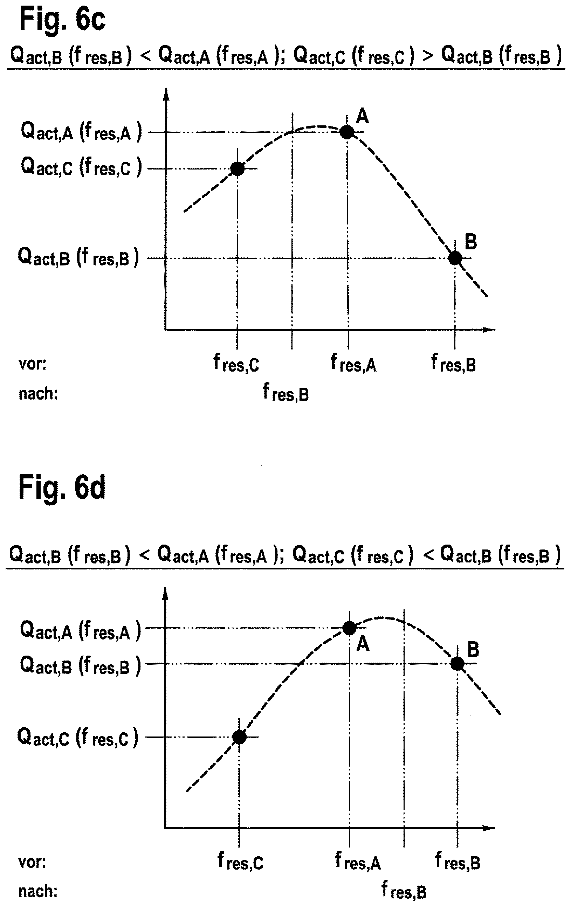

In Figur 6c ist der Fall dargestellt, dass $Q_{act,B}(f_{res,B}) < Q_{act,A}(f_{res,A})$ (vgl. Schritte 50.6 und 50.7), $Q_{act,C}(f_{res,C}) < Q_{act,A}(f_{res,A})$ (vgl. Schritt 50.8b3) und $Q_{act,C}(f_{res,C}) > Q_{act,B}(f_{res,B})$ (vgl. Schritt 50.8c1). Somit befinden wir uns im Teilschritt 50.8c2, in dem die zweite Resonanzfrequenz-Stelle $f_{res,B}$ mit

$$f_{res,B} = (f_{res,C} + f_{res,A})/2$$

auf einen Mittelwert zwischen der ersten und der dritten Resonanzfrequenz-Stelle $f_{res,A}$, $f_{res,B}$ verringert wird, um sich mit der nächsten Iteration dem lokalen Maximum der Ist-Güte anzunähern. Zudem wird in Teilschritt 50.8c3 die Schrittweite mit

$$f_{step} = f_{step}/2$$

halbiert. Die halbierte Schrittweite und die zweite Resonanzfrequenz-Stelle werden schließlich an den neunten Teilschritt 50.9 weitergegeben, so dass der iterative Prozess gemäß der obigen Beschreibung fortläuft.

Figur 6d zeigt schließlich noch den Fall, wonach die Bedingung

$$Q_{act,C}(f_{res,C}) > Q_{act,B}(f_{res,B})$$

nicht erfüllt ist und wir uns folglich in Teilschritt 50.8d befinden. Hier wird die zweite Resonanzfrequenz-Stelle $f_{res,B}$ mit

$$f_{res,B} = (f_{res,B} + f_{res,A})/2$$

auf einen Mittelwert zwischen der ersten und der zweiten Resonanzfrequenz-Stelle $f_{res,A}$, $f_{res,B}$ verringert, um sich mit der nächsten Iteration dem lokalen Maximum der Ist-Güte anzunähern. Nachfolgend wird in Teilschritt 50.8c3 die Schrittweite auf die Hälfte reduziert und an den Teilschritt 50.9 übergeben.

Es sei abschließend noch darauf hingewiesen, dass das gezeigte Ausführungsbeispiele weder auf die Figuren 1 bis 5 noch auf die genannten Leistungs- und Spannungswerte beschränkt ist. Insbesondere kann die Erfindung auch bei drahtlosen Energieübertragungen mit Übertragungsleistungen von deutlich mehr als 10W, beispielsweise für Anwendungen in Küchen, Elektrofahrzeugen oder dergleichen, zum Einsatz kommen.

**Patentansprüche**

1. Verfahren zur drahtlosen, insbesondere induktiven, Energieübertragung von einer Energiesendevorrichtung (14) zu einem Verbraucher (18), wobei in zumindest einem Verfahrensschritt eine Unterbrechung der Energieübertragung von der Energiesendevorrichtung (14) zu dem Verbraucher (18) in Verbindung mit einer Fremdobjekterkennung erfolgt, wobei in zumindest einem Verfahrensschritt (50) ein iterativer Prozess für einen Frequenzdurchlauf zur Erfassung eines lokalen Maximums einer für eine Resonanzfrequenz ($f_{res,A}$, $f_{res}$) charakteristischen Ist-Güte ($Q_{act,A}(f_{res,A})$, $Q_{act,n+1}(f_{res})$) der drahtlosen ausgeführt wird, **dadurch gekennzeichnet, dass** ausgehend von einer ersten Resonanzfrequenz-Stelle ($f_{res,A}$, $f_{res}$) in Abhängigkeit von einer definierten Schrittweite ($f_{step}$) die Ist-Güte ($Q_{act,B}(f_{res,B})$, $Q_{act,C}(f_{res,C})$) an den sich ergebenden Resonanzfrequenz-Stellen ($f_{res,B}$, $f_{res,C}$) derart erfasst und für Vergleiche mit anderen erfassten Ist-Güten herangezogen wird, dass das lokale Maximum der Ist-Güte ($Q_{act,A}(f_{res,A})$, $Q_{act,n+1}(f_{res})$) zumindest angenähert erreicht ist, wobei der iterative Prozess in zumindest einem Verfahrensschritt (50.9) nur so lange wiederholt wird, bis die erste Resonanzfrequenz-Stelle ($f_{res,A}$) in zumindest einem Verfahrensschritt (50.8a, 50.8b4) des iterativen Prozesses auf einen Wert gesetzt wurde, der unterhalb eines unteren Grenzwerts ($f_{res,min}$) oder oberhalb eines oberen Grenzwerts ($f_{res,max}$) für die Resonanzfrequenz ($f_{res}$) liegt.

2. Verfahren nach Anspruch 1, **dadurch gekennzeichnet, dass** der iterative Prozess gemäß dem zumindest einen Verfahrensschritt (50.9) nur so lange wiederholt wird, bis die Schrittweite ($f_{step}$) in einem Verfahrensschritt (50.8c3) des iterativen Prozesses durch ein Verringern, insbesondere Halbieren, einen unteren Grenzwert ($f_{step,min}$) unterschritten hat.

3. Verfahren nach einem der vorhergehenden Ansprüche, **dadurch gekennzeichnet, dass** in jeder Iteration des iterativen Prozesses mindestens drei Resonanzfrequenz-Stellen ($f_{res,A}$, $f_{res,B}$, $f_{res,C}$) bestimmt werden und dass an zumindest zwei dieser Resonanzfrequenz-Stellen ($f_{res,A}$, $f_{res,B}$) jeweils eine charakteristische Ist-Güte ($Q_{act,A}(f_{res,A})$, $Q_{act,B}(f_{res,B})$) erfasst wird.

4. Verfahren nach Anspruch 3, **dadurch gekennzeichnet, dass** in zumindest einem Verfahrensschritt (50.8a) des iterativen Prozesses die dritte Resonanzfrequenz-Stelle ($f_{res,C}$) derart bestimmt wird, dass sie gegenüber der zweiten Resonanzfrequenz-Stelle ($f_{res,B}$) um eine Differenz zwischen der zweiten und der ersten Resonanzfrequenz-Stelle ($f_{res,B}$, $f_{res,A}$) erhöht ist, wenn die an der zweiten Resonanzfrequenz-Stelle ($f_{res,B}$) erfasste Ist-Güte ($Q_{act,B}(f_{res,B})$) größer ist, als die an der ersten Resonanzfrequenz-Stelle ($f_{res,A}$) erfasste Ist-Güte ($Q_{act,A}(f_{res,A})$).

5. Verfahren nach Anspruch 3, **dadurch gekennzeichnet, dass** in zumindest einem Verfahrensschritt (50.8b2) an der dritten Resonanzfrequenz-Stelle ($f_{res,C}$) eine charakteristische Ist-Güte ($Q_{act,C}(f_{res,C})$) erfasst wird, wenn die an der zweiten Resonanzfrequenz-Stelle ($f_{res,B}$) erfasste Ist-Güte ($Q_{act,B}(f_{res,B})$) kleiner ist, als die an der ersten Resonanzfrequenz-Stelle ($f_{res,A}$) erfasste Ist-Güte ($Q_{act,A}(f_{res,A})$).

6. Verfahren nach Anspruch 5, **dadurch gekennzeichnet, dass** in zumindest einem Verfahrensschritt (50.8b4) des iterativen Prozesses die zweite Resonanzfrequenz-Stelle ($f_{res,B}$) derart bestimmt wird, dass sie gegenüber der dritten Resonanzfrequenz-Stelle ($f_{res,C}$) um eine Differenz zwischen der dritten und der ersten Resonanzfrequenz-Stelle ($f_{res,C}$, $f_{res,A}$) verringert ist, wenn die an der dritten Resonanzfrequenz-Stelle ($f_{res,C}$) erfasste Ist-Güte ($Q_{act,C}(f_{res,C})$) größer ist, als die an der ersten Resonanzfrequenz-Stelle ($f_{res,A}$) erfasste Ist-Güte ($Q_{act,A}(f_{res,A})$).

7. Verfahren nach Anspruch 5, **dadurch gekennzeichnet, dass** in zumindest einem Verfahrensschritt (50.8c2) des iterativen Prozesses die zweite Resonanzfrequenz-Stelle ($f_{res,B}$) derart bestimmt wird, dass sie auf einen Mittelwert zwischen der ersten und der dritten Resonanzfrequenz-Stelle ($f_{res,A}$, $f_{res,C}$) verringert ist, wenn die an der dritten Resonanzfrequenz-Stelle ($f_{res,C}$) erfasste Ist-Güte ($Q_{act,C}(f_{res,C})$) größer ist, als die an der zweiten Resonanzfrequenz-Stelle ($f_{res,B}$) erfasste Ist-Güte ($Q_{act,B}(f_{res,B})$).

8. Verfahren nach Anspruch 3, **dadurch gekennzeichnet, dass** in zumindest einem Verfahrensschritt (50.8d) des iterativen Prozesses die zweite Resonanzfrequenz-Stelle ($f_{res,B}$) derart bestimmt wird, dass sie auf einen Mittelwert zwischen der ersten und der zweiten Resonanzfrequenz-Stelle ($f_{res,A}$, $f_{res,B}$) verringert ist, wenn die an der zweiten Resonanzfrequenz-Stelle ($f_{res,B}$) erfasste Ist-Güte ($Q_{act,B}(f_{res,B})$) größer ist, als die an der ersten Resonanzfrequenz-Stelle ($f_{res,A}$) erfasste Ist-Güte ($Q_{act,A}(f_{res,A})$).

9. Verfahren nach Anspruch 5, **dadurch gekennzeichnet, dass** in zumindest einem Verfahrensschritt (50.8d) des iterativen Prozesses die zweite Resonanzfrequenz-Stelle ($f_{res,B}$) derart bestimmt wird, dass sie auf einen Mittelwert zwischen der ersten und der zweiten Resonanzfrequenz-Stelle ($f_{res,A}$, $f_{res,B}$) verringert ist, wenn die an der dritten Resonanzfrequenz-Stelle ($f_{res,C}$) erfasste Ist-Güte ($Q_{act,C}(f_{res,C})$) kleiner ist, als die an der zweiten Resonanzfrequenz-Stelle ($f_{res,B}$) erfasste Ist-Güte ($Q_{act,B}(f_{res,B})$).

10. Drahtlose Energiesendevorrichtung (14) zur Durchführung des Verfahrens nach einem der vorhergehenden Ansprüche 1 bis 9, **dadurch gekennzeichnet, dass** die drahtlose Energiesendevorrichtung (14) für einen Leistungsbereich der drahtlos zu übertragenen Energie innerhalb einer unteren Leistungsgrenze von 5 W und einer oberen Leistungsgrenze von 30 W, insbesondere 15 W, ausgelegt ist.

11. Drahtlose Energiesendevorrichtung (14) zur Durchführung des Verfahrens nach einem der vorhergehenden Ansprüche 1 bis 9, **dadurch gekennzeichnet, dass** die drahtlose Energiesendevorrichtung (14) für einen Leistungsbereich der drahtlos zu übertragenen Energie innerhalb einer unteren Leistungsgrenze von 30 W und einer oberen Leistungsgrenze von 200 W, insbesondere 65 W, ausgelegt ist.

12. Drahtlose Energiesendevorrichtung (14) zur Durchführung des Verfahrens nach einem der vorhergehenden Ansprüche 1 bis 9, **dadurch gekennzeichnet, dass** die drahtlose Energiesendevorrichtung (14) für einen Leistungsbereich der drahtlos zu übertragenen Energie oberhalb einer unteren Leistungsgrenze von 200 W, insbesondere 2000 W, ausgelegt ist.

**Claims**

1. Method for wirelessly, in particular inductively, transmitting energy from an energy transmitting device (14) to a load (18), wherein at least one method step comprises interrupting the energy transmission from the energy transmitting device (14) to the load (18) in connection with the detection of a foreign object, wherein at least one method step (50) comprises an iterative process for a frequency sweep for capturing a local maximum of an actual quality ($Q_{act,A}$ ($f_{res,A}$), $Q_{act,n+1}(f_{res})$) of the wireless that is characteristic of a resonant frequency ($f_{res,A}$, $f_{res}$), **characterized in that**, starting from a first resonant frequency point ($f_{res,A}$, $f_{res}$), the actual quality ($Q_{act,B}(f_{res,B})$, $Q_{act,C}(f_{res,C})$) is captured at the resulting resonant frequency points ($f_{res,B}$, $f_{res,C}$) on the basis of a defined step width ($f_{step}$) and is used for comparisons with other captured actual qualities in such a manner that the local maximum of the actual quality ($Q_{act,A}(f_{res,A})$, $Q_{act,n+1}(f_{res})$) is at least approximately achieved, wherein the iterative process is repeated in at least one method step (50.9) only until the first resonant frequency point ($f_{res,A}$) has been set, in at least one method step (50.8a, 50.8b4) of the iterative process, to a value which is below a lower limit value ($f_{res,min}$) or above an upper limit value ($f_{res,max}$) for the resonant frequency ($f_{res}$).

2. Method according to Claim 1, **characterized in that** the iterative process is repeated according to the at least one method step (50.9) only until the step width ($f_{step}$) has fallen below a lower limit value ($f_{step,min}$) in a method step (50.8c3) of the iterative process as a result of being reduced, in particular halved.

3. Method according to one of the preceding claims, **characterized in that** at least three resonant frequency points ($f_{res,A}$, $f_{res,B}$, $f_{res,C}$) are determined in each iteration of the iterative process, and **in that** a characteristic actual quality ($Q_{act,A}$ ($f_{res,A}$), $Q_{act,B}$ ($f_{res,B}$)) is respectively captured at least two of these resonant frequency points ($f_{res,A}$, $f_{res,B}$) .

4. Method according to Claim 3, **characterized in that** the third resonant frequency point ($f_{res,C}$) is determined in at least one method step (50.8a) of the iterative process in such a manner that it is increased by a difference between the second and the first resonant frequency point ($f_{res,B}$, $f_{res,A}$) in comparison with the second resonant frequency point ($f_{res,B}$) if the actual quality ($Q_{act,B}(f_{res,B})$) captured at the second resonant frequency point ($f_{res,B}$) is greater than the actual quality ($Q_{act,A}(f_{res,A})$) captured at the first resonant frequency point ($f_{res,A}$).

5. Method according to Claim 3, **characterized in that** a characteristic actual quality ($Q_{act,C}(f_{res,C})$) is captured at the third resonant frequency point ($f_{res,C}$) in at least one method step (50.8b2) if the actual quality ($Q_{act,B}(f_{res,B})$) captured at the second resonant frequency point ($f_{res,B}$) is lower than the actual quality ($Q_{act,A}(f_{res,A})$) captured at the first resonant frequency point ($f_{res,A}$).

6. Method according to Claim 5, **characterized in that** the second resonant frequency point ($f_{res,B}$) is determined in at least one method step (50.8b4) of the iterative process in such a manner that it is reduced by a difference between the third and the first resonant frequency point ($f_{res,C}$, $f_{res,A}$) in comparison with the third resonant frequency point ($f_{res,C}$) if the actual quality ($Q_{act,C}(f_{res,C})$) captured at the third resonant frequency point ($f_{res,C}$) is greater than the actual quality ($Q_{act,A}(f_{res,A})$) captured at the first resonant frequency point ($f_{res,A}$).

7. Method according to Claim 5, **characterized in that** the second resonant frequency point ($f_{res,B}$) is determined in at least one method step (50.8c2) of the iterative process in such a manner that it is reduced to a mean value between the first and the third resonant frequency point ($f_{res,A}$, $f_{res,C}$) if the actual quality ($Q_{act,C}(f_{res,C})$) captured at the third resonant frequency point ($f_{res,C}$) is greater than the actual quality ($Q_{act,B}(f_{res,B})$) captured at the second resonant frequency point ($f_{res,B}$).

8. Method according to Claim 3, **characterized in that** the second resonant frequency point ($f_{res,B}$) is determined in at least one method step (50.8d) of the iterative process in such a manner that it is reduced to a mean value between the first and the second resonant frequency point ($f_{res,A}$, $f_{res,B}$) if the actual quality ($Q_{act,B}(f_{res,B})$) captured at the second resonant frequency point ($f_{res,B}$) is greater than the actual quality ($Q_{act,A}(f_{res,A})$) captured at the first resonant frequency point ($f_{res,A}$).

9. Method according to Claim 5, **characterized in that** the second resonant frequency point ($f_{res,B}$) is determined in at least one method step (50.8d) of the iterative process in such a manner that it is reduced to a mean value between the first and the second resonant frequency point ($f_{res,A}$, $f_{res,B}$) if the actual quality ($Q_{act,C}(f_{res,C})$) captured at the third resonant frequency point ($f_{res,C}$) is lower than the actual quality ($Q_{act,B}(f_{res,B})$) captured at the second resonant frequency point ($f_{res,B}$).

10. Wireless energy transmitting device (14) for carrying out the method according to one of the preceding Claims 1 to 9, **characterized in that** the wireless energy transmitting device (14) is designed for a power range of the energy to be wirelessly transmitted within a lower power limit of 5 W and an upper power limit of 30 W, in particular 15 W.

11. Wireless energy transmitting device (14) for carrying out the method according to one of the preceding Claims 1 to 9, **characterized in that** the wireless energy transmitting device (14) is designed for a power range of the energy to be wirelessly transmitted within a lower power limit of 30 W and an upper power limit of 200 W, in particular 65 W.

12. Wireless energy transmitting device (14) for carrying out the method according to one of the preceding Claims 1 to 9, **characterized in that** the wireless energy transmitting device (14) is designed for a power range of the energy to be wirelessly transmitted above a lower power limit of 200 W, in particular 2000 W.

## Revendications

1. Procédé de transfert d'énergie sans fil, en particulier par induction, d'un dispositif émetteur d'énergie (14) à un consommateur (18), dans lequel, dans au moins une étape de procédé, une interruption du transfert d'énergie du dispositif émetteur d'énergie (14) au consommateur (18) a lieu en relation avec une identification d'objet étranger, dans lequel, dans au moins une étape de procédé (50), un processus itératif est effectué pour un passage de fréquence afin de détecter un maximum local pour un facteur de qualité réel ($Q_{act,A}(f_{res,A})$, $Q_{act,n+1}(f_{res})$) caractéristique de la fréquence de résonance ($f_{res,A}$, $f_{res}$) du sans fil,
caractérisé en ce qu'en partant d'un premier point de fréquence de résonance ($f_{res,A}$, $f_{res}$) en fonction d'un incrément défini ($f_{step}$), le facteur de qualité réel ($Q_{act,B}(f_{res,B})$, $Q_{act,C}(f_{res,C})$) aux points de fréquence de résonance résultants ($f_{res,B}$, $f_{res,C}$) est détecté et utilisé pour des comparaisons avec d'autres facteurs de qualité réels de telle sorte que le maximum local du facteur de qualité réel ($Q_{act,A}(f_{res,A})$, $Q_{act,n+1}(f_{res})$) est atteint au moins approximativement, dans lequel le processus itératif dans au moins une étape de procédé (50.9) est répété seulement jusqu'à ce que le premier point de fréquence de résonance ($f_{res,A}$) ait été réglé dans au moins une étape de procédé (50.8a, 50.8b4) du processus itératif sur une valeur qui se situe au-dessous d'une valeur limite inférieure ($f_{res,min}$) ou au-dessus d'une valeur limite supérieure ($f_{res,max}$) pour la fréquence de résonance ($f_{res}$).

2. Procédé selon la revendication 1, **caractérisé en ce que** le processus itératif selon ladite au moins une étape de procédé (50.9) n'est répété que jusqu'à ce que l'incrément ($f_{step}$) dans une étape de procédé (50.8c3) du processus itératif soit inférieur à une valeur limite inférieure ($f_{step,min}$) suite à une diminution, en particulier une division par deux.

3. Procédé selon l'une quelconque des revendications précédentes, **caractérisé en ce qu'**à chaque itération du processus itératif, au moins trois points de fréquence de résonance ($f_{res,A}$, $f_{res,B}$, $f_{res,C}$) sont déterminés, et **en ce qu'**en au moins deux de ces points de fréquence de résonance ($f_{res,A}$, $f_{res,B}$) respectivement un facteur de qualité réel caractéristique ($Q_{act,A}(f_{res,A})$, $Q_{act,B}(f_{res,B})$) est détecté.

4. Procédé selon la revendication 3, **caractérisé en ce que** dans au moins une étape de procédé (50.8a) du processus itératif, le troisième point de fréquence de résonance ($f_{res,C}$) est déterminé de telle sorte qu'il est augmenté par rapport au deuxième point de fréquence de résonance ($f_{res,B}$) d'une différence entre le deuxième et le premier point de fréquence de résonance ($f_{res,B}$, $f_{res,A}$) si le facteur de qualité réel ($Q_{act,B}(f_{res,B})$) détecté au deuxième point de fréquence de résonance ($f_{res,B}$) est supérieur au facteur de qualité réel ($Q_{act,A}(f_{res,A})$) détecté au premier point de fréquence de résonance ($f_{res,A}$).

5. Procédé selon la revendication 3, **caractérisé en ce que** dans au moins une étape de procédé (50.8b2), au troisième point de fréquence de résonance ($f_{res,C}$), un facteur de qualité réel caractéristique ($Q_{act,C}(f_{res,C})$) est détecté si le facteur de qualité réel ($Q_{act,B}(f_{res,B})$) détecté au deuxième point de fréquence de résonance ($f_{res,B}$) est inférieur au facteur de qualité réel ($Q_{act,A}(f_{res,A})$) détecté au premier point de fréquence de résonance ($f_{res,A}$).

6. Procédé selon la revendication 5, **caractérisé en ce que** dans au moins une étape de procédé (50.8b4) du processus itératif, le deuxième point de fréquence de résonance ($f_{res,B}$) est déterminé de telle sorte qu'il est diminué par rapport au troisième point de fréquence de résonance d'une différence entre le troisième et le premier point de fréquence de résonance ($f_{res,C}$, $f_{res,A}$) si le facteur de qualité réel ($Q_{act,C}(f_{res,C})$) détecté au troisième point de fréquence de résonance ($f_{res,C}$) est supérieur au facteur de qualité réel ($Q_{act,A}(f_{res,A})$) détecté au premier point de fréquence de résonance ($f_{res,A}$).

7. Procédé selon la revendication 5, **caractérisé en ce que** dans au moins une étape de procédé (50.8c2) du processus itératif, le deuxième point de fréquence de résonance ($f_{res,B}$) est déterminé de telle sorte qu'il est diminué à une moyenne entre le premier et le troisième point de fréquence de résonance ($f_{res,A}$, $f_{res,C}$) si le facteur de qualité réel ($Q_{act,C}(f_{res,C})$) détecté au troisième point de fréquence de résonance ($f_{res,C}$) est supérieur au facteur de qualité réel ($Q_{act,B}(f_{res,B})$) détecté au deuxième point de fréquence de résonance ($f_{res,B}$).

8. Procédé selon la revendication 3, **caractérisé en ce que** dans au moins une étape de procédé (50.8d) du processus itératif, le deuxième point de fréquence de résonance ($f_{res,B}$) est déterminé de telle sorte qu'il est diminué à une moyenne entre le premier et le deuxième point de fréquence de résonance ($f_{res,A}$, $f_{res,B}$) si le facteur de qualité réel ($Q_{act,B}(f_{res,B})$) détecté au deuxième point de fréquence de résonance ($f_{res,B}$) est supérieur au facteur de qualité réel ($Q_{act,A}(f_{res,A})$) détecté au premier point de fréquence de résonance ($f_{res,A}$) .

9. Procédé selon la revendication 5, **caractérisé en ce que** dans au moins une étape de procédé (50.8d) du processus itératif, le deuxième point de fréquence de résonance ($f_{res,B}$) est déterminé de telle sorte qu'il est diminué à une moyenne entre le premier et le deuxième point de fréquence de résonance ($f_{res,A}$, $f_{res,B}$) si le facteur de qualité réel ($Q_{act,C}(f_{res,C})$) détecté au troisième point de fréquence de résonance ($f_{res,C}$) est inférieur au facteur de qualité réel ($Q_{act,B}(f_{res,B})$) détecté au deuxième point de fréquence de résonance ($f_{res,B}$) .

10. Dispositif émetteur d'énergie sans fil (14) permettant d'exécuter le procédé selon l'une quelconque des revendications précédentes 1 à 9, **caractérisé en ce que** le dispositif émetteur d'énergie sans fil (14) est conçu pour une plage de puissance de l'énergie à transférer sans fil à l'intérieur d'une limite de puissance inférieure de 5 W et d'une limite de puissance supérieure de 30 W, en particulier de 15 W.

11. Dispositif émetteur d'énergie sans fil (14) permettant d'exécuter le procédé selon l'une quelconque des revendications précédentes 1 à 9, **caractérisé en ce que** le dispositif émetteur d'énergie sans fil (14) est conçu pour une plage de puissance de l'énergie à transférer sans fil à l'intérieur d'une limite de puissance inférieure de 30 W et d'une limite de puissance supérieure de 200 W, en particulier de 65 W.

12. Dispositif émetteur d'énergie sans fil (14) permettant d'exécuter le procédé selon l'une quelconque des revendications précédentes 1 à 9, **caractérisé en ce que** le dispositif émetteur d'énergie sans fil (14) est conçu pour une plage de puissance de l'énergie à transférer sans fil au-dessus d'une limite de puissance inférieure de 200 W, en particulier de 2000 W.

# Fig. 1

# Fig. 2

# Fig. 3

# Fig. 4

# Fig. 5

## Fig. 6a

$$Q_{act,B} \, (f_{res,B}) > Q_{act,A} \, (f_{res,A})$$

$Q_{act,B} \, (f_{res,B})$

$Q_{act,A} \, (f_{res,A})$

B

A

vor:   $f_{res,A}$       $f_{res,B}$       $f_{res,C}$

nach:            $f_{res,A}$       $f_{res,B}$

## Fig. 6b

$$Q_{act,B} \, (f_{res,B}) < Q_{act,A} \, (f_{res,A}); \; Q_{act,C} \, (f_{res,C}) > Q_{act,A} \, (f_{res,A})$$

$Q_{act,C} \, (f_{res,C})$

$Q_{act,A} \, (f_{res,A})$

$Q_{act,B} \, (f_{res,B})$

A

B

vor:            $f_{res,C}$       $f_{res,A}$       $f_{res,B}$

nach:   $f_{res,B}$   $f_{res,A}$

# Fig. 6c

$Q_{act,B}\,(f_{res,B}) < Q_{act,A}\,(f_{res,A}); \; Q_{act,C}\,(f_{res,C}) > Q_{act,B}\,(f_{res,B})$

$Q_{act,A}\,(f_{res,A})$

$Q_{act,C}\,(f_{res,C})$

$Q_{act,B}\,(f_{res,B})$

A

B

vor:     $f_{res,C}$     $f_{res,A}$     $f_{res,B}$

nach:        $f_{res,B}$

# Fig. 6d

$Q_{act,B}\,(f_{res,B}) < Q_{act,A}\,(f_{res,A}); \; Q_{act,C}\,(f_{res,C}) < Q_{act,B}\,(f_{res,B})$

$Q_{act,A}\,(f_{res,A})$

$Q_{act,B}\,(f_{res,B})$

$Q_{act,C}\,(f_{res,C})$

A

B

vor:     $f_{res,C}$     $f_{res,A}$     $f_{res,B}$

nach:        $f_{res,B}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012205693 A1
- DE 102013212588

- EP 2346136 A1